# EUROPEAN PATENT SPECIFICATION

(11) **EP 3 365 104 B1**
(45) Date of publication and mention of the grant of the patent: **08.09.2021**
(21) Application number: 17730961.4
(22) Date of filing: 10.03.2017
(51) Int. Cl.: B01J 35/00, B01J 21/06, B01J 37/02, B01J 31/06, A61L 9/20

(54) **METHOD FOR PREPARING A TITANIUM DIOXIDE CATALYST SUPPORTED ON POLYMER FILM OR MEMBRANE SUBSTRATE**
HERSTELLUNGSVERFAHREN EINES AUF POLYMER FILM ODER MEMBRAN GETRÄGERTEN TITANOXIDKATALYSATORS
PROCÉDÉ DE PRÉPARATION D'UN CATALYSATEUR À BASE DE DIOXIDE DE TITANE SUPPORTÉ SUR UN FILM OU UNE MEMBRANE EN POLYMÈRE

(30) Priority: 14.03.2016 TH 1601001453
(43) Date of publication of application: 29.08.2018
(73) Proprietor: Chulalongkorn University, Pathumwan, Bangkok 10330 (TH)
(72) Inventor: PRASERTDAM, Piyasan, Pathumwan Bangkok 10330 (TH)
(74) Representative: HGF
(86) International application number: PCT/TH2017/000018
(87) International publication number: WO 2017/160242

(56) References cited:
- EP-A1- 0 486 469
- US-A1- 2005 118 434
- SCHMIDT H ET AL: "Application of spray techniques for new photocatalytic gradient coatings on plastics", THIN SOLID FILMS, ELSEVIER, AMSTERDAM, NL, vol. 502, no. 1-2, 28 April 2006 (2006-04-28), pages 132-137, XP025006229, ISSN: 0040-6090, DOI: 10.1016/J.TSF.2005.07.257 [retrieved on 2006-04-28]
- ZHOU L ET AL: "Preparation of TiO"2-SiO"2 film with high photocatalytic activity on PET substrate", MATERIALS LETTERS, ELSEVIER, AMSTERDAM, NL, vol. 60, no. 3, 1 February 2006 (2006-02-01), pages 396-399, XP027898650, ISSN: 0167-577X [retrieved on 2006-02-01]
- AZIZ ET AL: "Recent progress on development of tio2 this film photocatalysts for pollutant removal", RECENT PATENTS ON MATERIALS SCI, BENTHAM SCIENCE PUBLISHERS LTD, USA, vol. 2, no. 2, 1 January 2009 (2009-01-01) , pages 88-111, XP008128790, ISSN: 1874-4656

## Description

### FIELD OF THE INVENTION

The present invention relates to chemical engineering, in particular to a titanium dioxide catalyst supported on a polymer film or membrane substrate and to a method of preparation for photocatalytic applications.

### BACKGROUND OF THE INVENTION

Titanium dioxide has been widely used as a catalyst in the photocatalytic field. As a photocatalyst, titanium dioxide is used commonly in the form of powder, making it either impossible or extremely costly to recycle the catalyst. For this reason, while attempts have been made to form a coating of titanium dioxide on various substrates, such as metal, ceramic, polymer film and membrane, using different coating techniques, the major disadvantage of these titanium dioxide-coated catalysts is the short life time of a few weeks, mainly attributed to the methods used for coating. In addition, forming a coating by applying a layer of titanium dioxide directly onto the surface of a substrate, without an intermediate layer between them, can cause the decomposition of the substrate due to the photocatalytic activity of titanium dioxide.

US 2008/0026161 A1 discloses a process for producing a coating of titanium dioxide on a polymeric substrate, such as polyvinyl chloride, polypropylene, polyethylene, polymethyl methacrylate, polystyrene, polycarbonate and polyurethane, for photocatalytic applications. Prior to coating with titanium dioxide, the substrate is coated with an inorganic polymer to form an underlayer, which is intended to protect the substrate from decomposition with titanium dioxide. However, the inorganic polymer comprises silicon dioxide and/or zirconium dioxide, which, in turn, can lead to partial deactivation of titanium dioxide.

WO 2014/017934 A1 discloses a method for producing a titanium dioxide catalyst supported on a polymer substrate, such as polypropylene, polypropylene copolymer, polyethylene, thermoplastic elastomer, polystyrene, high impact polystyrene, acrylonitrile-butadiene-styrene, styrene-acrylonitrile, polyamide or polycarbonate, by using low-temperature plasma to activate the surface of the substrate and subsequently immersing the surface-activated substrate in a suspension of titanium dioxide. The catalyst obtained has good stability of titanium dioxide coating and exhibits no change in the appearance of the coating after a photocatalytic activity test of 4 to 5 days. The surface activation using low-temperature plasma introduces reactive hydroxyl functional groups on the surface that could form chemical bonds with titanium dioxide. However, the amount of the plasma-induced hydroxyl functional groups is limited to only 5% of the surface oxygen existed, thereby resulting in a small amount of titanium dioxide being bonded to the surface of the substrate.

US2005/0118434A1 discloses a titanium dioxide catalyst supported on a polymer film or membrane substrate comprising a polymer film or membrane substrate, a titanium dioxide catalyst layer, and an underlayer in between the polymer film or membrane substrate and the titanium dioxide catalyst layer, wherein the underlayer is prepared by means of polymerization via a reaction between an aminosilane compound and a catalyst, which can be a transition metal compound, and wherein the surface of the underlayer is treated with alkali metal hydroxide, water and ethanol, or by corona treatment, in order to increase the number of polar groups on the surface of the underlayer before forming the titanium dioxide catalyst layer.

The present invention has been developed in consideration of the problems in the above-described conventional art, and the object thereof is to provide a titanium dioxide catalyst that can be recycled and reused several times without significant loss of catalytic activity and is applicable to photocatalysis for various applications, such as wastewater treatment, disease treatment and chemical synthesis.

### SUMMARY OF THE INVENTION

The inventor of the present invention has devoted himself to solving the above-mentioned problems and has found that when an underlayer made of an aminosilane compound prepared by means of atom transfer radical polymerization is made between a layer of titanium dioxide catalyst and a polymer film or membrane substrate, it is not only capable of preventing decomposition of the polymer film or membrane substrate and deactivation of the titanium dioxide catalyst, but also, when compared with the catalysts prepared by conventional methods, the obtained catalyst- has a higher amount of titanium dioxide coating; namely, it is bonded to the surface of the substrate at more than 50% of the surface oxygen existed, and exhibits excellent stability characteristics for photocatalytic activity in a 60-day test.

The present invention was achieved based on the above-mentioned knowledge and provides a method for preparing a titanium dioxide catalyst supported on a polymer film or membrane substrate comprising a polymer film or membrane substrate, a titanium dioxide catalyst layer, and at least one underlayer in between the polymer film or membrane substrate and the titanium dioxide catalyst layer, characterized in that the at least one underlayer is prepared by means of atom transfer radical polymerization via a reaction between an aminosilane compound and a transition metal compound.

The present invention provides a method for preparing a material having a titanium dioxide catalyst layer supported on a polymer film or membrane substrate and at least one underlayer in between the polymer film or membrane substrate and the titanium dioxide catalyst layer, the method comprising the following steps:
(1) preparing a solution of atom transfer radical polymerization by reacting an aminosilane compound with a transition metal compound in the presence of an inert gas at room temperature;
(2) spraying the solution obtained in step (1) onto the surface of a polymer film or membrane substrate;
(3) immersing the sprayed substrate in an organic or inorganic acid solution to introduce reactive hydroxyl functional groups on the surface of the sprayed substrate; and
(4) immersing the substrate obtained in step (3) in a solution of titanium dioxide in alcohol, which is adjusted to a basic condition using a basic solution and ultrasonic generator.

### BRIEF DESCRIPTION OF THE DRAWINGS

No drawing is necessary for the understanding of the invention.

### DETAILED DESCRIPTION OF THE INVENTION

The present invention relates to a method for preparing a titanium dioxide catalyst supported on a polymer film or membrane substrate comprising a polymer film or membrane substrate, a titanium dioxide catalyst layer, and at least one underlayer in between the polymer film or membrane substrate and the titanium dioxide catalyst layer, characterized in that the at least one underlayer is prepared by means of atom transfer radical polymerization via a reaction between an aminosilane compound and a transition metal compound.

The polymer film or membrane substrate can be selected from the group consisting of polyethylene, polypropylene, polyvinyl chloride, polystyrene, polymethyl methacrylate, polyvinylidene fluoride, polycarbonate and polyimide.

The aminosilane compound can be selected from the group consisting of (3-aminopropyl)triethoxysilane, (3'-aminopropyl)diethoxymethylsilane, (3-aminopropyl)dimethylethoxysilane, and (3-aminopropyl)trimethoxysilane. (3-aminopropyl)triethoxysilane is preferred.

The metal transition compound can be selected from the group consisting of copper (II) fluoride, copper (I) bromide, copper (II) chloride and copper (I) iodide. Copper (I) bromide is preferred.

The present invention provides a method for preparing a material having a titanium dioxide catalyst layer supported on a polymer film or membrane substrate and at least one underlayer in between the polymer film or membrane substrate and the titanium dioxide catalyst layer, the method comprising the following steps:
(1) preparing a solution of atom transfer radical polymerization by reacting an aminosilane compound with a transition metal compound in the presence of an inert gas at room temperature;
(2) spraying the solution obtained in step (1) onto the surface of a polymer film or membrane substrate;
(3) immersing the sprayed substrate in an organic or inorganic acid solution to introduce reactive hydroxyl functional groups on the surface of the sprayed substrate; and
(4) immersing the substrate obtained in step (3) in a solution of titanium dioxide in alcohol, which is adjusted to a basic condition using a basic solution and ultrasonic generator.

In step (1), the inert gas can be selected from the group consisting of argon, nitrogen and helium. Argon and/or nitrogen are preferred.

In step (3), the organic or inorganic acid can be selected from the group consisting of sulfuric acid, nitric acid, phosphoric acid and acetic acid. Sulfuric acid and/or nitric acid are preferred. The pH value of the organic or inorganic acid solution in which the sprayed substrate is immersed is between 1 and 3, preferably 2. The time for immersing the sprayed substrate in the organic or inorganic acid solution is 15 to 120 minutes, preferably 30 minutes.

In step (4), the alcohol can be selected from the group consisting of methanol, ethanol and propanol. Ethanol and/or methanol are preferred. The basic solution can be selected from the group consisting of sodium hydroxide, ammonia and calcium hydroxide. Ammonia is preferred. The pH value of the solution of titanium dioxide in alcohol in which the substrate is immersed is adjusted to between 10 and 13, preferably 12. The titanium dioxide-to-alcohol ratio of the solution of titanium dioxide in alcohol is 0.1 to 1.5 g of titanium dioxide to 110 to 250 mL of alcohol, preferably 1.0 g of titanium dioxide to 100 mL of alcohol. The time for immersing the substrate in the solution of titanium dioxide in alcohol is 30 to 180 minutes, preferably 90 minutes.

In the following examples, the method for preparing a titanium dioxide catalyst supported on a polymer film or membrane substrate according to the present invention is described by way of different examples. It should be understood that these examples are intended for the purposes of illustration only and are not intended to limit the scope of the present invention in any way.

### Example 1

8.6 g of 4-hydroxybenzenethiol, 15 mL of (3-aminopropyl)triethoxysilane, 15 mL of tetrahydrofuran, and 4.5 mL of triethylamine were mixed under nitrogen for 2 days. 0.13 g of 4-(dimethylamino)pyridine, 0.5 mL of triethylamine, and 8.1 mL of 2-bromoisobutyryl bromide were then added to the mixture obtained and allowed to react overnight. The solvent in the reaction mixture was allowed to evaporate completely. The evaporated product was then admixed with 100 mL of dichloromethane and dissolved into a homogeneous mixture. After the mixture was washed with a solution of 50% w/v of sodium hydrogen carbonate and water, the washed mixture was dried over magnesium sulphate powder to remove the residual water and allowed to stand until the volatile dichloromethane evaporated completely. The mixture obtained was then mixed with 0.24 g of copper (I) bromide, 0.34 g of 2, 2'-bipyridyl, and 18 mL of methanol under nitrogen for 8 hours, thus obtaining a precursor solution of the underlayer for the titanium dioxide catalyst of the present invention.

The precursor solution of the underlayer was added and mixed with tetrahydrofuran at a volumetric ratio of 1:2, followed by spraying onto the surface of a poly(methyl methacrylate) film. The sprayed film was then immersed in an organic or inorganic acid solution having a pH value of 2 for 30 minutes, followed by immersing in a solution of 1% w/v of crystalline titanium dioxide powder in alcohol, the pH of which was adjusted to 12, and stirring in an ultrasonic generator for 90 minutes. The resulting product was washed with ethanol and allowed to air-dry, thus obtaining the titanium dioxide catalyst of the present invention.

The titanium dioxide catalyst thus prepared was characterized to determine the amount of titanium dioxide on the surface of the poly(methyl methacrylate) film using energy-dispersive X-ray spectroscopy. The result is shown in Table 1.

### Comparative Example 1

A titanium dioxide catalyst was prepared as described in Example 1, but without spraying the solution of the underlayer onto the surface of a poly(methyl methacrylate) substrate. The amount of titanium dioxide on the surface of the poly(methyl methacrylate) film was determined using energy-dispersive X-ray spectroscopy, which is shown in Table 1.

### Example 2

A titanium dioxide catalyst was prepared as described in Example 1, but with the polymer film being a substrate made of polyvinyl chloride. The amount of titanium dioxide on the surface of the substrate was determined using energy-dispersive X-ray spectroscopy, which is shown in Table 1.

### Comparative Example 2

A titanium dioxide catalyst was prepared as described in Comparative Example 1, but with the polymer film being a substrate made of polyvinyl chloride. The amount of titanium dioxide on the surface of the substrate was determined using energy-dispersive X-ray spectroscopy, which is shown in Table 1.

### Example 3

A titanium dioxide catalyst was prepared as described in Example 1, but with the polymer film being a substrate made of polypropylene. The amount of titanium dioxide on the surface of the substrate was determined using energy-dispersive X-ray spectroscopy, which is shown in Table 1.

### Comparative Example 3

A titanium dioxide catalyst was prepared as described in Comparative Example 1, but with the polymer film being a substrate made of polypropylene. The amount of titanium dioxide on the surface of the substrate was determined using energy-dispersive X-ray spectroscopy, which is shown in Table 1.

### Example 4

A titanium dioxide catalyst was prepared as described in Example 1, but with the polymer film being a substrate made of polyvinylidene fluoride membrane. The amount of titanium dioxide on the surface of the substrate was determined using energy-dispersive X-ray spectroscopy, which is shown in Table 1.

### Comparative Example 4

A titanium dioxide catalyst was prepared as described in Comparative Example 1, but with the polymer film being a substrate made of polyvinylidene fluoride membrane. The amount of titanium dioxide on the surface of the substrate was determined using energy-dispersive X-ray spectroscopy, which is shown in Table 1.

### Photocatalytic Activity Test

The aim of this test was to evaluate the applicability of the titanium dioxide catalyst of the present invention to photocatalysis for wastewater treatment. The subjects of the test were the catalyst samples prepared in all the Examples and Comparative Examples. The test was conducted using natural sunlight as the light source. The catalyst samples were added to wastewater and placed under sunlight irradiation in common outdoor conditions for 60 days. After completion of the test, the catalyst samples were characterized to determine the amounts of titanium dioxide on the surfaces of the substrates using energy-dispersive X-ray spectroscopy. The results are shown in Table 1.

**Table 1**

| Example | Substrate | Amount of titanium dioxide on the surface of substrate (%w/w) | |
|---|---|---|---|
| | | Original | After a 60-day photocatalytic activity test |
| Example 1 | poly(methyl methacrylate) | 52.50 | 25.15 |
| Comparative Example 1 | poly(methyl methacrylate) | 2.88 | 2.68 |
| Example 2 | polyvinyl chloride | 29.66 | 28.21 |
| Comparative Example 2 | polyvinyl chloride | 3.21 | 3.04 |
| Example 3 | polypropylene | 39.67 | 38.11 |
| Comparative Example 3 | polypropylene | 0.35 | 0.31 |
| Example 4 | polyvinylidene fluoride membrane | 38.31 | 24.04 |
| Comparative Example 4 | polyvinylidene fluoride membrane | 0.58 | 0.98 |

From Table 1, it is evident that when compared with the titanium dioxide catalysts prepared by conventional methods (Comparative Examples 1, 2, 3 and 4), the titanium dioxide catalysts prepared in accordance with the present invention (Examples 1, 2, 3 and 4) have significantly higher amounts of titanium dioxide coating and exhibit superior stability characteristics for photocatalytic activity in a 60-day test.

### BEST MODE OF THE INVENTION

As described in the Detailed Description of the Invention.

## Claims

1. A method for preparing a material having a titanium dioxide catalyst layer supported on a polymer film or membrane substrate and at least one underlayer in between the polymer film or membrane substrate and the titanium dioxide catalyst layer, the method comprising the following steps:
(1) preparing a solution of atom transfer radical polymerization by reacting an aminosilane compound with a transition metal compound in the presence of an inert gas at room temperature;
(2) spraying the solution obtained in step (1) onto the surface of a polymer film or membrane substrate;
(3) immersing the sprayed substrate in an organic or inorganic acid solution to introduce reactive hydroxyl functional groups on the surface of the sprayed substrate; and
(4) immersing the substrate obtained in step (3) in a solution of titanium dioxide in alcohol, which is adjusted to a basic condition using a basic solution and ultrasonic generator.

2. The method according to claim 1, wherein the inert gas is selected from the group consisting of argon, nitrogen and helium.

3. The method according to claim 1 or claim 2, wherein the aminosilane compound is selected from the group consisting of (3-aminopropyl)triethoxysilane, (3-aminopropyl)diethoxymethylsilane, (3-aminopropyl)dimethylethoxysilane, and (3-aminopropyl)trimethoxysilane.

4. The method according to any of claim 1 to 3, wherein the metal transition compound is selected from the group consisting of copper (II) fluoride, copper (I) bromide, copper (II) chloride, and copper (I) iodide.

5. The method according to any of claims 1 to 4, wherein the polymer film or membrane substrate is selected from the group consisting of polyethylene, polypropylene, polyvinyl chloride, polystyrene, polymethyl methacrylate, polyvinylidene fluoride, polycarbonate and polyimide.

6. The method according to any of claims 1 to 5, wherein the organic or inorganic acid is selected from the group consisting of sulfuric acid, nitric acid, phosphoric acid and acetic acid.

7. The method according to any of claims 1 to 6, wherein the alcohol is selected from the group consisting of methanol, ethanol and propanol.

8. The method according to any of claims 1 to 7, wherein the basic solution is selected from the group consisting of sodium hydroxide, ammonia and calcium hydroxide.

9. The method according to any of claims 1 to 8, wherein the time for immersing the sprayed substrate in the organic or inorganic acid solution in step (3) is 15 to 120 minutes; optionally
wherein the time for immersing the sprayed substrate in the organic or inorganic acid solution in step (3) is 30 minutes.

10. The method according to any of claims 1 to 9, wherein the pH value of the organic or inorganic acid solution in which the sprayed substrate is immersed in step (3) is between 1 and 3; optionally
wherein the pH value of the organic or inorganic acid solution in which the sprayed substrate is immersed in step (3) is 2.

11. The method according to any of claims 1 to 10, wherein the pH value of the solution of titanium dioxide in alcohol in which the substrate is immersed in step (4) is adjusted to between 10 and 13; optionally
wherein the pH value of the solution of titanium dioxide in alcohol in which the substrate is immersed in step (4) is adjusted to 12.

12. The method according to any of claims 1 to 11, wherein the time for immersing the substrate in the solution of titanium dioxide in alcohol in step (4) is 30 to 180 minutes; optionally
wherein the time for immersing the substrate in the solution of titanium dioxide in alcohol in step (4) is 90 minutes.

13. The method according to any of claims 1 to 12, wherein the titanium dioxide-to-alcohol ratio of the solution of titanium dioxide in alcohol in step (4) is 0.1 to 1.5 g of titanium dioxide to 110 to 250 mL of alcohol.

14. The method according to any of claims 1 to 13, wherein the titanium dioxide-to-alcohol ratio of the solution of titanium dioxide in alcohol in step (4) is 1.0 g of titanium dioxide to 100 mL of alcohol.

## Patentansprüche

1. Verfahren zur Herstellung eines Materials mit einer Titandioxid-Katalysatorschicht, die auf einem Polymerfilm oder Membransubstrat getragen wird, und mindestens einer Unterschicht zwischen dem Polymerfilm oder dem Membransubstrat und der Titandioxid-Katalysatorschicht, wobei das Verfahren die folgenden Schritte umfasst:
(1) Herstellen einer Lösung einer radikalischen Atomtransferpolymerisation durch Umsetzen einer Aminosilanverbindung mit einer Übergangsmetallverbindung in der Gegenwart eines Inertgases bei Raumtemperatur;
(2) Sprühen der in Schritt (1) erhaltenen Lösung auf die Oberfläche eines Polymerfilms oder Membransubstrats;
(3) Eintauchen des besprühten Substrats in eine organische oder anorganische Säurelösung, um reaktive funktionelle Hydroxylgruppen auf der Oberfläche des besprühten Substrats einzuführen; und
(4) Eintauchen des in Schritt (3) erhaltenen Substrats in eine Lösung von Titandioxid in Alkohol, die unter Verwendung einer basischen Lösung und eines Ultraschallgenerators auf einen basischen Zustand eingestellt wird.

2. Verfahren nach Anspruch 1, wobei das Inertgas ausgewählt ist aus der Gruppe bestehend aus Argon, Stickstoff und Helium.

3. Verfahren nach Anspruch 1 oder Anspruch 2, wobei die Aminosilanverbindung ausgewählt ist aus der Gruppe bestehend aus (3-Aminopropyl)triethoxysilan, (3-Aminopropyl)diethoxymethylsilan, (3 -Aminopropyl)dimethylethoxysilan und (3 -Aminopropyl)trimethoxysilan.

4. Verfahren nach einem der Ansprüche 1 bis 3, wobei die Metallübergangsverbindung ausgewählt ist aus der Gruppe bestehend aus Kupfer(II)-Fluorid, Kupfer(I)-Bromid, Kupfer(II)-Chlorid und Kupfer(I)-Iodid.

5. Verfahren nach einem der Ansprüche 1 bis 4, wobei der Polymerfilm oder das Membransubstrat ausgewählt ist aus der Gruppe bestehend aus Polyethylen, Polypropylen, Polyvinylchlorid, Polystyrol, Polymethylmethacrylat, Polyvinylidenfluorid, Polycarbonat und Polyimid.

6. Verfahren nach einem der Ansprüche 1 bis 5, wobei die organische oder anorganische Säure ausgewählt ist aus der Gruppe bestehend aus Schwefelsäure, Salpetersäure, Phosphorsäure und Essigsäure.

7. Verfahren nach einem der Ansprüche 1 bis 6, wobei der Alkohol ausgewählt ist aus der Gruppe bestehend aus Methanol, Ethanol und Propanol.

8. Verfahren nach einem der Ansprüche 1 bis 7, wobei die basische Lösung ausgewählt ist aus der Gruppe bestehend aus Natriumhydroxid, Ammoniak und Calciumhydroxid.

9. Verfahren nach einem der Ansprüche 1 bis 8, wobei die Zeit zum Eintauchen des besprühten Substrats in die organische oder anorganische Säurelösung in Schritt (3) 15 bis 120 Minuten beträgt;
wobei optional die Zeit zum Eintauchen des besprühten Substrats in die organische oder anorganische Säurelösung in Schritt (3) 30 Minuten beträgt.

10. Verfahren nach einem der Ansprüche 1 bis 9, wobei der pH-Wert der organischen oder anorganischen Säurelösung, in die das besprühte Substrat in Schritt (3) eingetaucht wird, zwischen 1 und 3 beträgt;
wobei optional der pH-Wert der organischen oder anorganischen Säurelösung, in die das besprühte Substrat in Schritt (3) eingetaucht wird, 2 beträgt.

11. Verfahren nach einem der Ansprüche 1 bis 10, wobei der pH-Wert der Lösung von Titandioxid in Alkohol, in die das Substrat in Schritt (4) eingetaucht wird, auf zwischen 10 und 13 eingestellt wird;
wobei optional der pH-Wert der Lösung von Titandioxid in Alkohol, in die das Substrat in Schritt (4) eingetaucht wird, auf 12 eingestellt wird.

12. Verfahren nach einem der Ansprüche 1 bis 11, wobei die Zeit zum Eintauchen des Substrats in die Lösung von Titandioxid in Alkohol in Schritt (4) 30 bis 180 Minuten beträgt;
wobei optional die Zeit zum Eintauchen des Substrats in die Lösung von Titandioxid in Alkohol in Schritt (4) 90 Minuten beträgt.

13. Verfahren nach einem der Ansprüche 1 bis 12, wobei das Verhältnis von Titandioxid zu Alkohol der Lösung von Titandioxid in Alkohol in Schritt (4) 0,1 bis 1,5 g Titandioxid zu 110 bis 250 ml Alkohol beträgt.

14. Verfahren nach einem der Ansprüche 1 bis 13, wobei das Verhältnis von Titandioxid zu Alkohol der Lösung von Titandioxid in Alkohol in Schritt (4) 1,0 g Titandioxid zu 100 ml Alkohol beträgt.

## Revendications

1. Procédé de préparation d'un matériau ayant une couche de catalyseur dioxyde de titane supportée sur un film polymère ou un substrat de membrane et au moins une sous-couche entre le film polymère ou le substrat de membrane et la couche de catalyseur dioxyde de titane, le procédé comprenant les étapes suivantes :
(1) préparation d'une solution de polymérisation radicalaire par transfert d'atomes en faisant réagir un composé aminosilane avec un composé de métal de transition en présence d'un gaz inerte à température ambiante ;
(2) pulvérisation de la solution obtenue à l'étape (1) sur la surface d'un film polymère ou d'un substrat de membrane ;
(3) immersion du substrat pulvérisé dans une solution d'acide organique ou inorganique pour introduire des groupes fonctionnels hydroxyle réactifs sur la surface du substrat pulvérisé ; et
(4) immersion du substrat obtenu à l'étape (3) dans une solution de dioxyde de titane dans l'alcool, qui est ajustée à une condition basique en utilisant une solution basique et un générateur d'ultrasons.

2. Procédé selon la revendication 1, dans lequel le gaz inerte est choisi parmi le groupe constitué par l'argon, l'azote et l'hélium.

3. Procédé selon la revendication 1 ou la revendication 2, dans lequel le composé aminosilane est choisi parmi le groupe constitué par le (3-aminopropyl)triéthoxysilane, le (3-aminopropyl)diéthoxyméthylsilane, le (3-aminopropyl)diméthyléthoxysilane et le (3-aminopropyl)triméthoxysilane.

4. Procédé selon l'une quelconque des revendications 1 à 3, dans lequel le composé de métal de transition est choisi parmi le groupe constitué de fluorure de cuivre (II), bromure de cuivre (I), chlorure de cuivre (II) et iodure de cuivre (I).

5. Procédé selon l'une quelconque des revendications 1 à 4, dans lequel le film polymère ou le substrat de membrane est choisi parmi le groupe constitué de polyéthylène, polypropylène, chlorure de polyvinyle, polystyrène, polyméthacrylate de méthyle, fluorure de polyvinylidène, polycarbonate et polyimide.

6. Procédé selon l'une quelconque des revendications 1 à 5, dans lequel l'acide organique ou inorganique est choisi parmi le groupe constitué par l'acide sulfurique, l'acide nitrique, l'acide phosphorique et l'acide acétique.

7. Procédé selon l'une quelconque des revendications 1 à 6, dans lequel l'alcool est choisi parmi le groupe constitué par le méthanol, l'éthanol et le propanol.

8. Procédé selon l'une quelconque des revendications 1 à 7, dans lequel la solution basique est choisie parmi le groupe constitué par l'hydroxyde de sodium, l'ammoniac et l'hydroxyde de calcium.

9. Procédé selon l'une quelconque des revendications 1 à 8, dans lequel le temps d'immersion du substrat pulvérisé dans la solution d'acide organique ou inorganique à l'étape (3) est de 15 à 120 minutes ; éventuellement
dans lequel le temps d'immersion du substrat pulvérisé dans la solution d'acide organique ou inorganique à l'étape (3) est de 30 minutes.

10. Procédé selon l'une quelconque des revendications 1 à 9, dans lequel le pH de la solution d'acide organique ou inorganique dans laquelle le substrat pulvérisé est immergé à l'étape (3) est entre 1 et 3 ; éventuellement
dans lequel le pH de la solution d'acide organique ou inorganique dans laquelle le substrat pulvérisé est immergé à l'étape (3) est 2.

11. Procédé selon l'une quelconque des revendications 1 à 10, dans lequel le pH de la solution de dioxyde de titane dans l'alcool dans laquelle le substrat est immergé à l'étape (4) est ajusté entre 10 et 13 ; éventuellement
dans lequel le pH de la solution de dioxyde de titane dans l'alcool dans laquelle le substrat est immergé à l'étape (4) est ajusté à 12.

12. Procédé selon l'une quelconque des revendications 1 à 11, dans lequel le temps d'immersion du substrat dans la solution de dioxyde de titane dans l'alcool à l'étape (4) est de 30 à 180 minutes ; éventuellement
dans lequel le temps d'immersion du substrat dans la solution de dioxyde de titane dans l'alcool à l'étape (4) est de 90 minutes.

13. Procédé selon l'une quelconque des revendications 1 à 12, dans lequel le rapport dioxyde de titane/alcool de la solution de dioxyde de titane dans l'alcool à l'étape (4) est de 0,1 à 1,5 g de dioxyde de titane pour 110 à 250 mL d'alcool.

14. Procédé selon l'une quelconque des revendications 1 à 13, dans lequel le rapport dioxyde de titane/alcool de la solution de dioxyde de titane dans l'alcool à l'étape (4) est de 1,0 g de dioxyde de titane pour 100 mL d'alcool.
